# EUROPEAN PATENT SPECIFICATION

(11) **EP 0 941 206 B1**
(45) Date of publication and mention of the grant of the patent: **19.12.2001**
(21) Application number: 97902299.3
(22) Date of filing: 03.02.1997
(51) Int. Cl.: B66B 5/04, F16H 55/36

(54) **PULLEY MEANS, PARTICULARLY FOR LIFTING APPARATUSES**
ROLLE, INSBESONDERE FÜR HEBEVORRICHTUNGEN
POULIE PARTICULIEREMENT ADAPTEE POUR DES APPAREILS DE LEVAGE

(30) Priority: 26.11.1996 IT MO960152
(43) Date of publication of application: 15.09.1999
(73) Proprietor: P.F.B. S.R.L., 41100 Modena (IT)
(72) Inventor: BARALDI, Roberto, I-41040 Baggiovara (IT)
(74) Representative: Luppi, Luigi
(86) International application number: EP9700466
(87) International publication number: WO9823526

(56) References cited:
- EP-A- 0 012 669
- DE-A- 4 036 073
- DE-C- 3 830 864
- FR-A- 2 072 791
- FR-A- 2 319 804

## Description

The invention concerns pulley means, particularly in a speed limiting device for lifting apparatuses, comprising supporting means for rotatably supporting a pulley having a peripheral groove suitable for receiving a respective rope, stop means for said pulley comprising first stop means fixed to said pulley and designed for receiving second stop means supported by said supporting means, the second stop means being associated with speed detecting means that controls the action of said second stop means on said first stop means when the peripheral speed of said pulley exceeds a predetermined value.

A device of the type mentioned above is a safety device in a lifting apparatus because it stops the lift cage when the speed thereof exceeds a predetermined value.

In some conventional speed limiting devices, the pulleys are obtained by casting as a single unit including the respective first stop means. In addition, when an additional test pulley is required, this test pulley too is obtained from the same casting.

Therefore, the group comprising pulley, first stop means and additional test pulley, if any, is very expensive. Furthermore, such a structure results in high storage costs for manufaturers of speed limiting devices, since pulleys of a number of different diameters are required, which makes it necessary to prepare stocks of said groups for each diameter.

It is known from FR-A-202791 a pulley comprising a rim portion and a hub portion, the hub portion being provided with a coupling surface to which the rim portion is fixed.

There is no indication in FR-A-202791 that auxiliary means such as a test pulley may be coupled to the hub portion.

Thus the technical problem arises of making the speed limiting devices for lifting apparatus less expensive and more efficient, which may be equipped with the above mentioned auxiliary means.

According to the invention, there is provided a pulley means, particularly for lifting means, comprising supporting means for rotatably supporting a pulley externally provided with coupling means suitable for mating with a flexible transmission means and internally provided with a central portion encircling shaft means of said supporting means, characterized in that said central portion is provided with a first coupling surface, to which a separate pulley crown element is fixed and with a second coupling surface to which auxiliary means is fixed.

The main advantage of this invention is the possibility of manufacturing the body of the pulley with a standardized hub portion, i.e. independently of the diameter of the pulley and independently of the shape and dimensions of the auxiliary means which will have to be assembled with the hub. This leads to a remarkable construction simplification: in fact, in order to manufacture a complete set of devices with pulleys having a number of different diameters, it is necessary to manufacture only crown elements having diameters according according to a predetermined range, but having the same inner diameter for being mounted on the first standardized coupling surface.

Adopting a crown element leads to an easier mounting, a reduction of the number of different components and the possibility, in the event of damages or wear, of replacing only the crown element without replacing the original hub body, or viceversa, and of replacing only the hub body continuing to use the crown element. Furthermore, the storage is simplified.

In addition, it is possible to equip the pulley means with auxiliary means, such as an additional pulley, a remotely controlled operating device, or a speed detector, such as an encoder, in order to better control the operation of the lifting device, the standardized hub portion being capable of receiving said auxiliary means.

The various possible embodiments of the speed limiting device show a modular structure which may be assembled according to specific installation requirements.

Furthermore, the hub and the crown may be manufactured with different materials, suitable to obtain special properties of mechanical and wear resistance.

The invention will be better understood with reference to the enclosed drawings, in which:

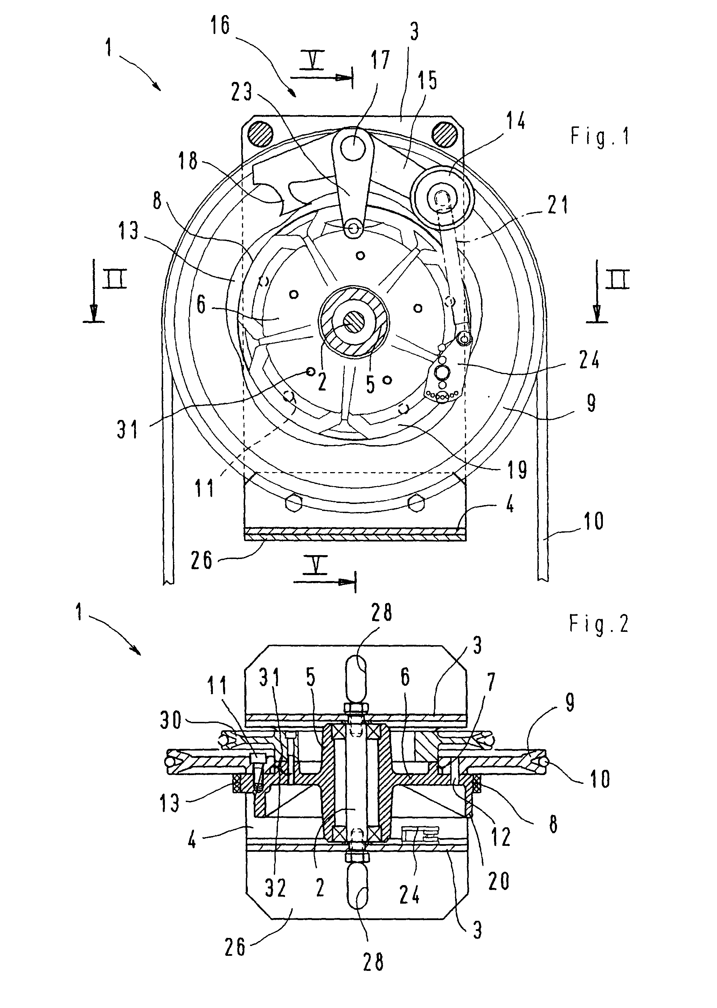

Figure 1 is a longitudinal section of a speed limiting device equipped with a driving pulley having a maximum diameter (i.e. 300 mm), with a test pulley having a diameter conveniently smaller than the diameter of the driving pulley and a connecting lower plate for connecting the device to the support frame of the lift cage;
Figure 2 is a view from above of the device of Figure 1;
Figure 3 is a front view of a speed limiting device as in Figure 1, but equipped with a driving pulley having minimum dimensions and without the connecting lower plate;
Figure 4 is a section through line IV-IV in Figure 3;
Figure 5 is a section through line V-V in Figure 1;
Figure 6 is a section through the line VI-VI in Figure 5;
Figure 7 is a section as in Figure 2 showing a speed limiting device in which the driving pulley has an intermediate diameter and the test pulley has been replaced with a toothed pulley coupled to an encoder by means of a belt;
Figure 8 is a section through the line VIII-VIII in Figure 7;
Figure 9 is a section, as in Figure 8, wherein an encoder is shown that is driven by means of a pair of gear wheels;
Figure 10 is a section, as in Figure 8, but in which a toothed pulley has been replaced by a pulley equipped with reflective stripes and associated with a reflection sensor.

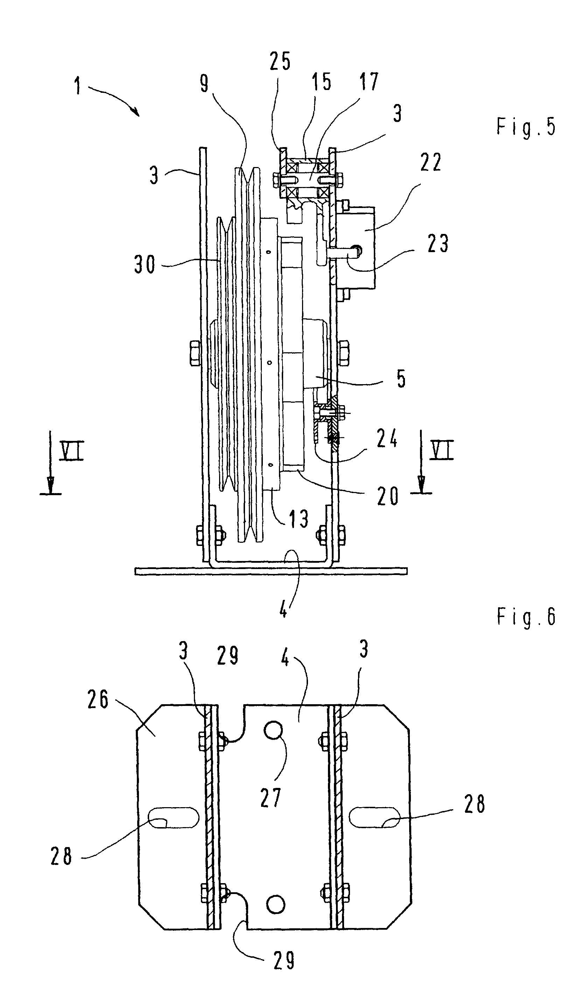

A speed limiting device 1 comprises a pin 2 fixed at its ends to a pair of sides 3 the lower ends of which are interconnected by a U-shaped support means 4, said support means being fixed to a frame by menas of locking means, not shown, passing through holes 27 (Figure 6). A hub 5 is rotatably coupled to the pin 2 at an intermediate position thereon, said hub having a coupling flange 6 on which a first outer coupling surface 7 and a second outer coupling surface 8 are obtained. On the first coupling surface 7, a crown 9 of a driving pulley is fitted, on which a rope 10 is wound lying parallel to the driving rope of the lift cage; the driving pulley is removably fixed to the hub 5 by menas of screws 11 and a rotation preventing plug 12. The first coupling surface 7 is designed in such a way as it is possible to fit on it driving pulleys having outer diameters choosen at will according to the features of the lifting apparatus. Therefore it is possible to use a standardized hub for any kind of apparatus, independently of the outer diameter of the driving pulley 9.

On the second coupling surface 8 a cam body 13 integral with the hub 5 is fitted , a wheel 14 being coupled to said cam so as to roll on the outer surface thereof, the wheel 14 being rotatably supported to an arm 15 of a pawl 16 oscillating around a pin 17 supported to a bridge 25 extending between the corresponding free ends of the sides 3.

At the end of the arm 15 opposed to the end engaged by the wheel 14 a catch 18 is provided, which is able to fit into recesses 19 defined by stop elements 20, correspondingly projecting outwards from the periphery of the coupling flange 6. The catch 18 is a double-acting catch, i.e. has opposed projections bilaterallly extending from a catch body, and therefore can act on the stop elements 20 independently of the direction of rotation of the hub 5 and the driving pulley 9, when the peripheral speed of the cam 13 exceed a preset value.

When the catch 18 is actuated by the cam 13 against the force of a return spring 21, susbtantially simultaneously a rear appendix 23 of the arm 15 actuates a microswitch 22 which stops the motor driving the lift cage.

The spring 21 is interposed between the arm 15 and a fixing element 24 the position of which with respect to one of the plates 3 is adjustable, so that the spring may apply to the arm 15 a predetermined return force.

At the lower end of the U-shaped support 4 an auxiliary fixing plate 26 may be provided, said fixing plate having holes corresponding to the holes 27 previously described with reference to the support 4 and acting as fixing elements for fixing the auxiliary plate to the support, the auxiliary plate being equipped with a pair of slits 28 for being fixed to the frame and with a pair of recesses 29 allowing passage of the rope 10 when the rope is wound on a test pulley 30.

The test pulley 30 is fastened to the coupling flange by means of screws 31 and is centred with respect to the flange through the same hole 32 by means of which the pulley 9 is centred with respect to the first coupling surface 7.

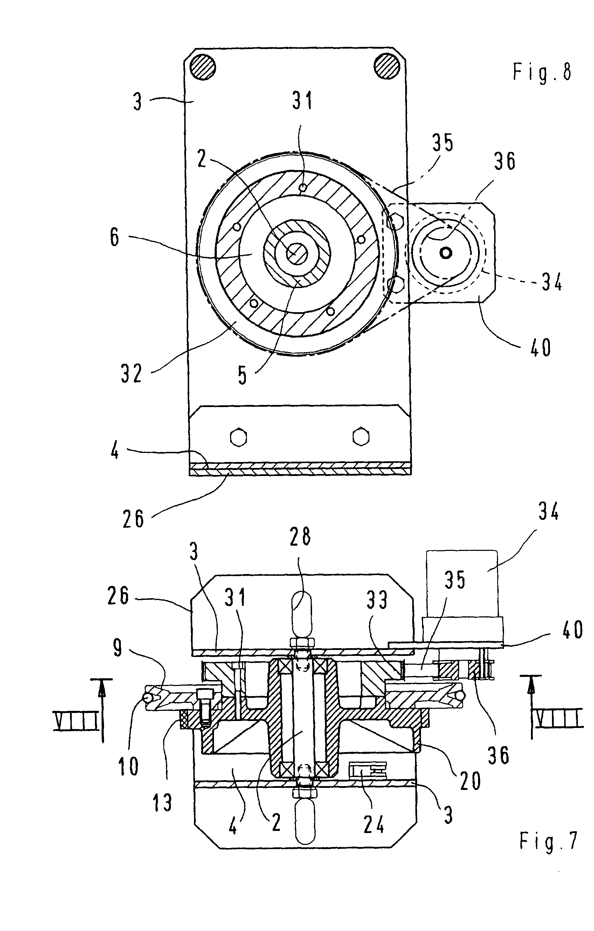

As shown in Figures 7 and 8, instead of the test pulley 30, a toothed pulley 33 may be installed, said toothed pulley being coupled to an encoder 34 by means of a toothed belt 35 and a driven pulley 36. The provision of an encoder allows a substantially improved control of position, speed and acceleration of the lift cage when it is moved both upward and downward and is advisable when the installation of a test pulley is not necessary. The coupling between the encoder 34 and the driving pulley 9 may be obtained also by means of a pair of gears 38, 39, coupled to the flange 6 and to the encoder shaft respectively.

The encoder 34 is fastened to a support plate 40 adjustably coupled to one of the sides 3.

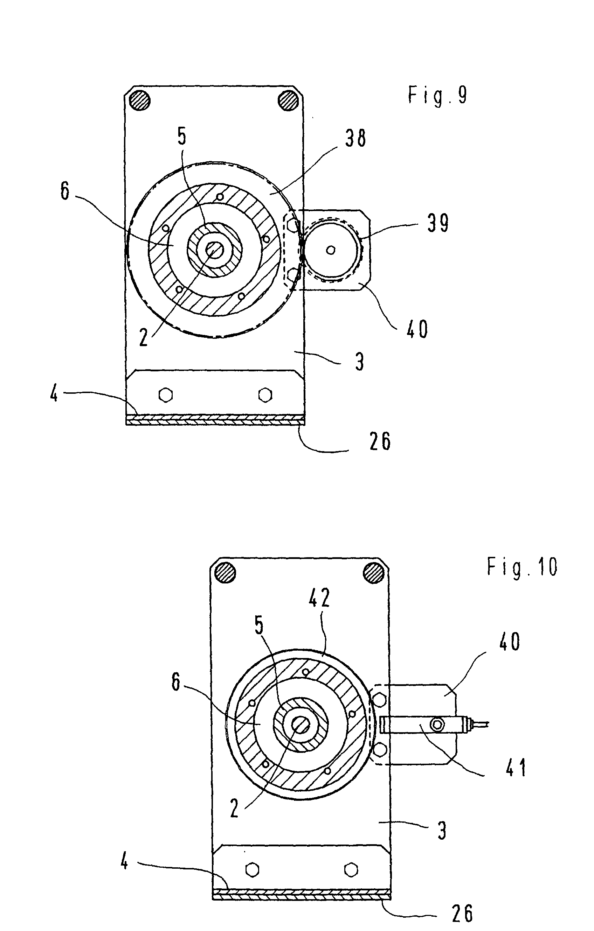

Alternatively, as shown in Figure 10, a light sensor 41 may be associated to the plate 40 to detect light signals emitted by a wheel with reflective stripes 42 fixed to the coupling flange 6, said wheel having a control function similar to that of the encoder 34.

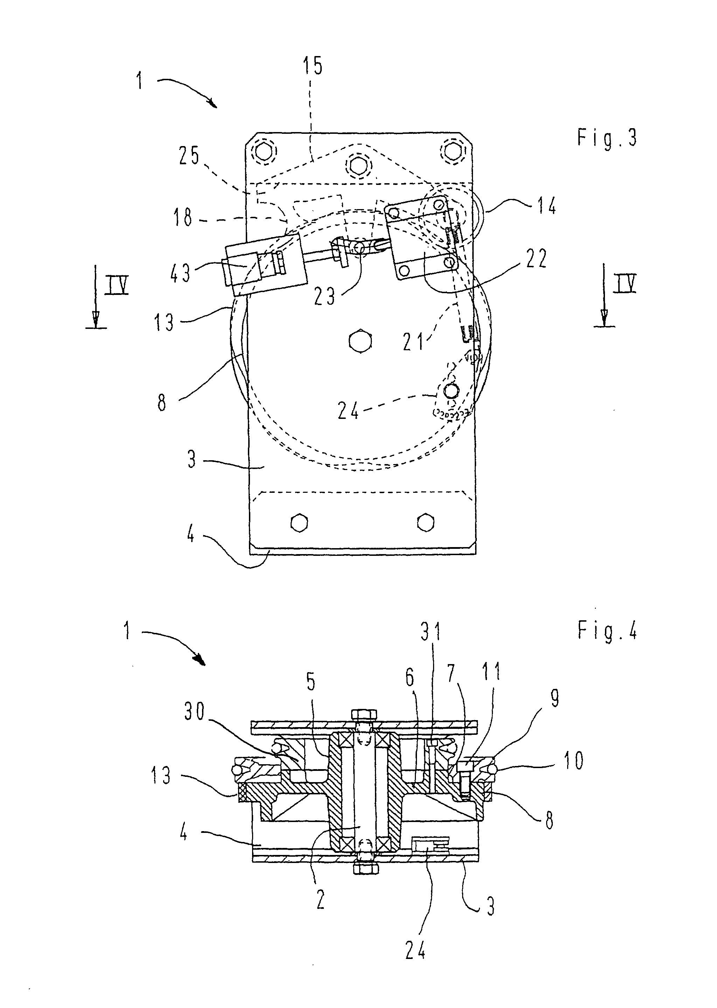

As shown in Figure 3, the microswitch 22 may be an automatically resettable switch which may be actuated by means of remotely controlled operating means including an electrically operated valve 43: thus test operations are easier, particularly when the device is placed in a zone of a lifting apparatus which can not be accessed.

## Claims

1. Pulley means, particularly for lifting means, comprising supporting means (2, 3, 4, 26) for rotatably supporting a pulley (5, 6, 9) externally provided with coupling means suitable for mating with a flexible transmission means (10) and internally provided with a central portion (5, 6) encircling shaft means (2) of said supporting means (2, 3, 4, 26), **characterized in that** said central portion (5, 6) is provided with a first coupling surface (7), to which a separate pulley crown element (9) is fixed and with a second coupling surface (8) to which auxiliary means (13, 30, 33, 38, 42) is fixed.

2. Pulley means according to claim 1, wherein it further comprises stop means (19, 20, 18) for said pulley.

3. Pulley means according to claim 2, wherein said stop means comprises first stop means (19, 20) integral with said pulley (5, 6, 9) and suitable for receiving second stop means (18) supported by said supporting means (2, 3, 4, 26).

4. Pulley means according to claim 3, wherein said second stop means (18) are associated with speed detecting means (13, 14, 15) that controls the action of said second stop means (18) on said first stop means (19, 20) when the peripheral speed of said pulley (5, 6, 9) exceeds a predetermined value.

5. Pulley means according to one of preceding claims, wherein said central portion (5, 6) comprises a hub (5) integral with a coupling flange (6) peripherally equipped with said first coupling surface (7).

6. Pulley means according to one of preceding claims, wherein said auxiliary means (30, 33, 38, 42) is fixed to the same inner surface of said pulley crown element (9) which couples with said first coupling surface (7).

7. Pulley means according to one pf preceding claims, wherein said auxiliary means (13) comprises a cam body (13) the inner periphery of which is fixed to said second coupling surface (8).

8. Pulley means according to one of preceding claims, wherein said auxiliary means comprises an auxiliary test pulley (30).

9. Pulley means according to one of claims 1 to 7, wherein said auxiliary means comprises a toothed pulley (33).

10. Pulley means according to one of claims 1 to 7, wherein said auxiliary means comprises a gear wheel (38).

11. Pulley means according to one of claims 1 to 7, wherein said auxiliary means comprises a wheel (42) with reflective stripes.

12. Pulley means according to one of claims 1 to 7, wherein said auxiliary means comprises a microswitch (22) with a remote control (43).

13. Pulley means according to claim 1, wherein said support means (2, 3, 4, 26) comprises a substantially U-shaped structure (3, 4).

14. Pulley means according to claim 12, wherein a lower portion (4) of said U-shaped structure may be fixed to an auxiliary plate (26).

## Patentansprüche

1. Rollenmittel, insbesondere für Hebemittel, mit Haltemitteln (2, 3, 4, 26) zum drehbaren Halten einer Rolle (5, 6, 9), die außenseitig mit Koppelmitteln, die zum Kämmen mit flexiblen Übertragungsmitteln (10) geeignet sind, und innenseitig mit einem mittigen Abschnitt (5, 6) versehen ist, der Wellenmittel (2) der Haltemittel (2, 3, 4, 26) umgibt, **dadurch gekennzeichnet, daß** der mittige Abschnitt (5, 6) mit einer ersten Koppelfläche (7), an der ein separates Rollenkronenelement (9) befestigt ist, und mit einer zweiten Koppelfläche (8) versehen ist, an der Zusatzmittel (13, 30, 33, 38, 42) befestigt sind.

2. Rollenmittel nach Anspruch 1, die weiterhin Stoppmittel (19, 20, 18) für die Rolle aufweisen.

3. Rollenmittel nach Anspruch 2, wobei die Stoppmittel erste Stoppmittel (19, 20) aufweisen, die mit der Rolle (5, 6, 9) eine Einheit bilden, und die zum Aufnehmen zweiter Stoppmittel (18) geeignet sind, die von den Haltemitteln (2, 3, 4, 26) gehalten werden.

4. Rollenmittel nach Anspruch 3, wobei die zweiten Stoppmittel (18) mit Geschwindigkeitsdetektiermitteln (13, 14, 15) verknüpft sind, die die Wirkung der zweiten Stoppmittel (18) auf die ersten Stoppmittel (19, 20) kontrollieren, wenn die Umfangsgeschwindigkeit der Rolle (5, 6, 9) einen vorbestimmten Wert überschreitet.

5. Rollenmittel nach einem der vorhergehenden Ansprüche, wobei der mittige Abschnitt (5, 6) eine Nabe (5) aufweist, die mit einem Koppelflansch (6) eine Einheit bildet, der umfänglich mit der ersten Koppelfläche (7) ausgestattet ist.

6. Rollenmittel nach einem der vorhergehenden Ansprüche, wobei die Zusatzmittel (30, 33, 38, 42) an derselben Innenfläche des Rollenkronenelements (9) befestigt sind, die an die erste Koppelfläche (7) koppelt.

7. Rollenmittel nach einem der vorhergehenden Ansprüche, wobei die Zusatzmittel (13) einen Nockenkörper (13) aufweisen, dessen Innenumfang an der zweiten Koppelfläche (8) befestigt ist.

8. Rollenmittel nach einem der vorhergehenden Ansprüche, wobei die Zusatzmittel eine Zusatztestrolle (30) aufweisen.

9. Rollenmittel nach einem der Ansprüche 1 bis 7, wobei die Zusatzmittel eine gezahnte Rolle (33) aufweisen.

10. Rollenmittel nach einem der Ansprüche 1 bis 7, wobei die Zusatzmittel ein Zahnrad (38) aufweisen.

11. Rollenmittel nach einem der Ansprüche 1 bis 7, wobei die Zusatzmittel ein Rad (42) mit reflektierenden Streifen aufweisen.

12. Rollenmittel nach einem der Ansprüche 1 bis 7, wobei die Zusatzmittel einen Mikroschalter (22) mit einer Fernsteuerung (43) aufweisen.

13. Rollenmittel nach Anspruch 1, wobei die Haltemittel (2, 3, 4, 26) eine im wesentlichen U-förmige Struktur (3, 4) aufweisen.

14. Rollenmittel nach Anspruch 12, wobei ein unterer Abschnitt (4) der U-förmigen Struktur an einer Zusatzplatte (26) befestigt sein kann.

## Revendications

1. Moyens de poulie, en particulier pour des moyens de levage, comprenant des moyens de support (2, 3, 4, 26) pour supporter rotativement une poulie (5, 6, 9) pourvue extérieurement de moyens d'accouplement adaptés pour s'associer à un moyen de transmission flexible (10) et pourvue intérieurement d'une partie centrale (5, 6) entourant des moyens de pivot (2) desdits moyens de support (2, 3, 4, 26), ***caractérisés en ce que*** ladite partie centrale (5, 6) est pourvue d'une première surface d'accouplement (7), à laquelle est fixé un élément séparé de couronne (9) de poulie et d'une seconde surface d'accouplement (8) à laquelle sont fixés des moyens auxiliaires (13, 30, 33, 38, 42).

2. Moyens de poulie selon la Revendication 1, qui comprennent de plus des moyens d'arrêt (19, 20, 18) pour ladite poulie.

3. Moyens de poulie selon la Revendication 2, dans lesquels lesdits moyens d'arrêt comprennent des premiers moyens d'arrêt (19, 20) solidaires de ladite poulie (5, 6, 9) et aptes à recevoir des seconds moyens d'arrêt (18) supportés par lesdits moyens de support (2, 3, 4, 26).

4. Moyens de poulie selon la Revendication 3, dans lesquels lesdits seconds moyens d'arrêt (18) sont associés à des moyens de détection de la vitesse (13, 14, 15) qui contrôlent l'action desdits seconds moyens d'arrêt (18) sur lesdits premiers moyens d'arrêt (19, 20) lorsque la vitesse périphérique de ladite poulie (5, 6, 9) excède une valeur prédéterminée.

5. Moyens de poulie selon l'une des Revendications précédentes, dans lesquels ladite portion centrale (5, 6) comprend un moyeu (5) solidaire d'une bride d'accouplement (6) équipée de manière périphérique de ladite première surface d'accouplement (7).

6. Moyens de poulie selon l'une des Revendications précédentes, dans lesquels lesdits moyens auxiliaires (30, 33, 38, 42) sont fixés à la même surface intérieure dudit élément de couronne (9) de la poulie qui s'accouple avec ladite première surface d'accouplement (7).

7. Moyens de poulie selon l'une des Revendications précédentes, dans lesquels lesdits moyens auxiliaires (13) comprennent un corps de came (13) dont la périphérie intérieure est fixée à ladite second surface d'accouplement (8).

8. Moyens de poulie selon l'une des Revendications précédentes, dans lesquels lesdits moyens auxiliaires comprennent une poulie auxiliaire d'essai (30).

9. Moyens de poulie selon l'une quelconque des Revendications 1 à 7, dans lesquels lesdits moyens auxiliaires comprennent une poulie dentée (33).

10. Moyens de poulie selon l'une quelconque des Revendications 1 à 7, dans lesquels lesdits moyens auxiliaires comprennent une roue dentée (38).

11. Moyens de poulie selon l'une quelconque des Revendications 1 à 7, dans lesquels lesdits moyens auxiliaires comprennent une roue (42) avec des bandes réfléchissantes.

12. Moyens de poulie selon l'une quelconque des Revendications 1 à 7, dans lesquels lesdits moyens auxiliaires comprennent un microrupteur (22) avec une commande à distance (43).

13. Moyens de poulie selon la Revendication 1, dans lesquels lesdits moyens de support (2, 3, 4, 26) comprennent une structure (3, 4) sensiblement en U.

14. Moyens de poulie selon la Revendication 12, dans lesquels une partie inférieure (4) de ladite structure en U peut être fixée sur une plaque auxiliaire (26).
